# EUROPEAN PATENT APPLICATION

(11) **EP 4 597 009 A1**
(43) Date of publication of application: **06.08.2025**
(21) Application number: 23869307.1
(22) Date of filing: 30.06.2023
(51) Int. Cl.: F25D 11/00, F25D 17/08, G01N 35/00, F25B 21/02

(54) **CONTAINER STORAGE DEVICE**

(30) Priority: 28.09.2022 JP 2022154664
(71) Applicant: HITACHI HIGH-TECH CORPORATION, Tokyo 105-6409 (JP)
(72) Inventor: KUMAGAI Takahiro, Tokyo 105-6409 (JP); OKUSA Takenori, Tokyo 105-6409 (JP); MURAMATSU Yoshiki, Tokyo 105-6409 (JP)
(74) Representative: MERH-IP Matias Erny Reichl Hoffmann Patentanwälte PartG mbB
(86) International application number: PCT/JP2023/024302
(87) International publication number: WO 2024/070105

(57) **Abstract**

To improve cooling performance of a container storage device in which an electrothermal device is used. The container storage device includes a storage unit configured to store a container storing a liquid, and a cooling unit configured to cool air aspirated from the storage unit and supply the cooled air to the storage unit. The cooling unit includes a plurality of fins arranged along a flow of the air, and electrothermal devices respectively connected to the fins.

## Description

### Technical Field

The present invention relates to a container storage device.

### Background Art

As a technique for cooling a cold insulator, it is disclosed that power consumption is reduced in an automatic analyzer in which a Peltier element is used for temperature adjustment between an air conditioning space in which a reagent is used and a cold storage unit in which the reagent is cold stored (see PTL 1).

### Citation List

### Patent Literature

PTL 1: JP2020-201172A

### Summary of Invention

### Technical Problem

According to PTL 1, no consideration is given to improving cooling performance of a container storage device in which an electrothermal device such as the Peltier element is used.

Thus, an object of the present invention is to improve cooling performance of a container storage device in which an electrothermal device is used.

### Solution to Problem

A container storage device according to an aspect of the present invention includes: a storage unit configured to store a container storing a liquid; and a cooling unit configured to cool air aspirated from the storage unit and supply the cooled air to the storage unit. The cooling unit includes a plurality of fins arranged along a flow of the air, and electrothermal devices respectively connected to the fins.

### Advantageous Effects of Invention

According to the present invention, cooling performance of the container storage device in which the electrothermal devices are used can be improved.

### Brief Description of Drawings

[FIG. 1] FIG. 1 is a schematic diagram showing an example of an overall configuration of an automatic analysis system.
[FIG. 2] FIG. 2 is a schematic cross-sectional view showing a configuration example of a container storage device.
[FIG. 3] FIG. 3 is a perspective view showing an arrangement example of heat absorbing fins.
[FIG. 4] FIG. 4 is a perspective view showing an arrangement example of the heat absorbing fins.
[FIG. 5] FIG. 5 is a perspective view showing an arrangement example of the heat absorbing fins.
[FIG. 6] FIG. 6 is a schematic cross-sectional view showing a configuration example of the container storage device.
[FIG. 7] FIG. 7 is a schematic cross-sectional view showing a configuration example of the container storage device.
[FIG. 8] FIG. 8 is a schematic cross-sectional view showing a configuration example of the container storage device.
[FIG. 9] FIG. 9 is a perspective view showing a configuration example of the heat absorbing fins and a guide.
[FIG. 10] FIG. 10 is a schematic cross-sectional view showing a configuration example of the container storage device.

### Description of Embodiments

Hereinafter, a preferred embodiment of a container storage device will be described with reference to the accompanying drawings. In the following description and the accompanying drawings, components having a same functional configuration are denoted by a same reference numerals, and redundant description thereof is omitted.

### Embodiment 1

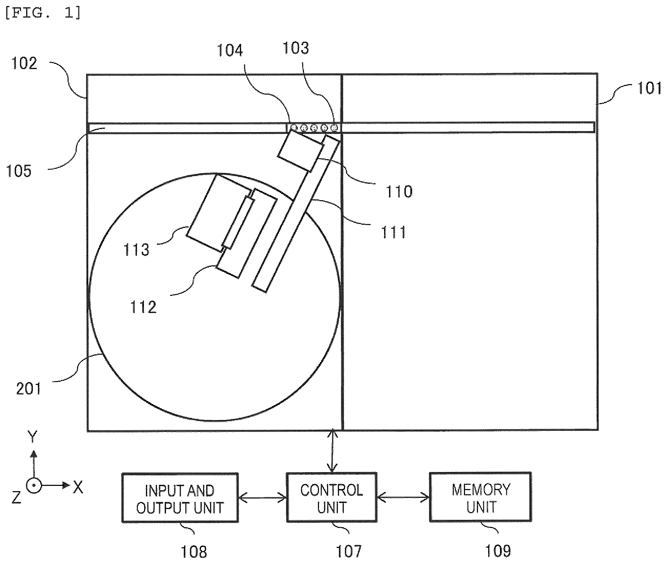

An example of an overall configuration of an automatic analysis system will be described with reference to FIG. 1. The automatic analysis system includes an automatic analyzer 101, a container storage device 102, a rack transport path 105, a control unit 107, an input and output unit 108, and a memory unit 109. Hereinafter, each unit will be described.

The automatic analyzer 101 is a device that analyzes a specific component contained in a sample such as blood or urine supplied from a patient, and is connected to the container storage device 102 via the rack transport path 105. The rack transport path 105 transports a rack 104 on which a plurality of containers 103 storing liquids (sample containers storing samples, reagent bottles storing reagents, and the like) are mounted.

The container storage device 102 cools the containers 103 and transports the containers 103 and the like to the rack 104 on the rack transport path 105. The containers 103 are stored in a storage unit 201, gripped by a container gripping unit 110, and transported along a container transport path 111. A shutter 112 is provided on an upper surface of the storage unit 201. The shutter 112 is opened by a shutter switching unit 113 when the containers 103 are transported.

The control unit 107 is a computer that analyzes the specific component contained in the sample based on a measurement signal transmitted from the automatic analyzer 101 and controls an operation of each unit.

The input and output unit 108 is a device that receives input of data necessary for analysis and displays an analysis result, and is, for example, a keyboard, a mouse, a touch panel, or a liquid crystal display.

The memory unit 109 is a device that stores the data necessary for analysis and the analysis result, and is, for example, a hard disk drive (HDD) or a slid state drive (SSD).

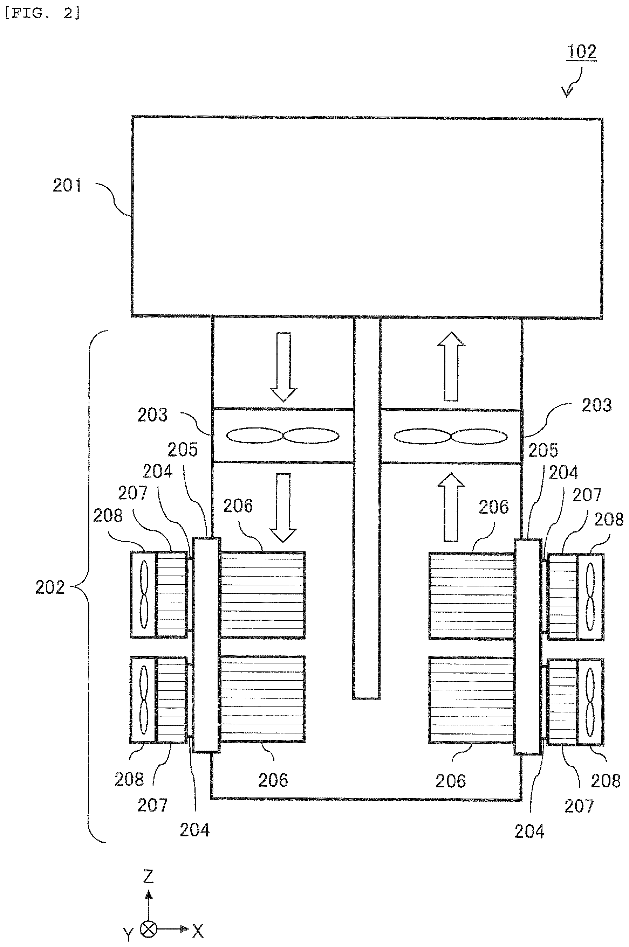

A configuration example of the container storage device 102 will be described with reference to FIG. 2. The container storage device 102 includes the storage unit 201 and a cooling unit 202.

The containers 103 are stored in the storage unit 201, and air aspirated and cooled by the cooling unit 202 is supplied to the storage unit 201.

In order to cool the air aspirated from the storage unit 201 and supply the cooled air to the storage unit 201, the cooling unit 202 includes circulation fans 203, electrothermal devices 204, heat transfer plates 205, heat absorbing fins 206, heat radiating fins 207, and heat radiating fans 208.

The circulation fans 203 generate a flow of the air in a direction of an arrow in the drawing. The air is aspirated from the storage unit 201 by the circulation fans 203, and the air cooled by operations of the electrothermal devices 204 is supplied to the storage unit 201.

The electrothermal devices 204 are elements that transfer heat from one surface to the other surface, and are, for example, Peltier elements. An amount of heat transferred by the electrothermal devices 204 changes according to power consumption of the electrothermal devices 204. The heat transfer plate 205 is attached to one surface of each of the electrothermal devices 204, and the heat radiating fin 207 is attached to the other surface.

The heat transfer plate 205 is a plate having a relatively high thermal conductivity, and is, for example, an aluminum plate or a copper plate. The electrothermal devices 204 are attached to one surface of the heat transfer plate 205, and the heat absorbing fins 206 are attached to the other surface.

The heat absorbing fins 206 absorb the heat of the air aspirated from the storage unit 201 by the circulation fans 203, and are arranged along the flow of the air generated by the circulation fans 203. The electrothermal devices 204 are respectively connected to the heat absorbing fins 206 via the heat transfer plate 205. That is, the heat absorbed by the heat absorbing fins 206 is transferred to the electrothermal devices 204 via the heat transfer plate 205 and transferred to the heat radiating fins 207 by the electrothermal devices 204, and thus, the air passing through the heat absorbing fins 206 is cooled.

The heat radiating fin 207 is attached to one surface of the electrothermal device 204 and radiates heat transferred by the electrothermal device 204, and the electrothermal device 204 is cooled by air blown from the heat radiating fin 207.

In the container storage device 102 shown in FIG. 2, the plurality of heat absorbing fins 206 are arranged along the flow of the air generated by the circulation fans 203 and the electrothermal devices 204 are respectively connected to the heat absorbing fins 206, and thus, the cooling performance can be improved. That is, each group of the heat absorbing fin 206 arranged along the flow of the air and the electrothermal device 204 individually cools the air aspirated from the storage unit 201, thereby improving the cooling performance of the container storage device 102,

Each of the electrothermal devices 204 is controlled by the control unit 107 such that the air supplied to the storage unit 201 reaches a predetermined set temperature. The set temperature may be set by an operator via the input and output unit 108. The temperature of the air is measured by, for example, a thermometer provided on the heat transfer plate 205. The temperature of the air in the storage unit 201 may be directly measured by a thermometer provided in the storage unit 201.

In order to prevent the load on the electrothermal devices 204 from being biased, control may be performed such that a difference in power consumed by the electrothermal devices 204 is within a predetermined range. For example, the electrothermal devices 204 may be controlled by the control unit 107 such that the power consumed by the electrothermal devices 204 is equal. More specifically, a target temperature of each of the electrothermal devices 204 may be set based on a value ΔT/N obtained by dividing a difference ΔT (= Tin - Tset) between a temperature Tin of the air aspirated from the storage unit 201 and a target temperature Tset of the air supplied to the storage unit 201 by the number N of the electrothermal devices 204. The target temperature of each of the electrothermal devices 204 may be set based on a flow rate ratio of the circulating air flowing into and cooled by the heat absorbing fins 206 such that the power consumption becomes uniform.

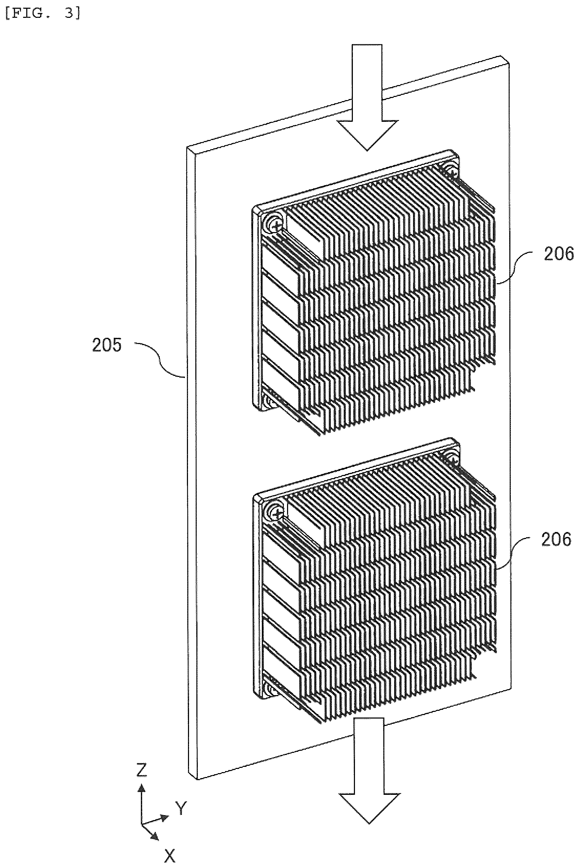

An arrangement example of the heat absorbing fins 206 will be described with reference to FIGS. 3 to 5. The heat absorbing fins 206 shown in FIG. 3 are arranged in series along the flow of the air. The heat absorbing fins 206 are formed, for example, by arranging a plurality of plates such as aluminum plates or copper plates as shown in FIG. 3. That is, the plates forming the heat absorbing fins 206 are arranged parallel to the flow of the air generated by the circulation fans 203. By arranging the plates parallel to the flow of the air, the flow of the air is less likely to be disturbed, and a pressure loss of the air passing through the heat absorbing fins 206 can be reduced.

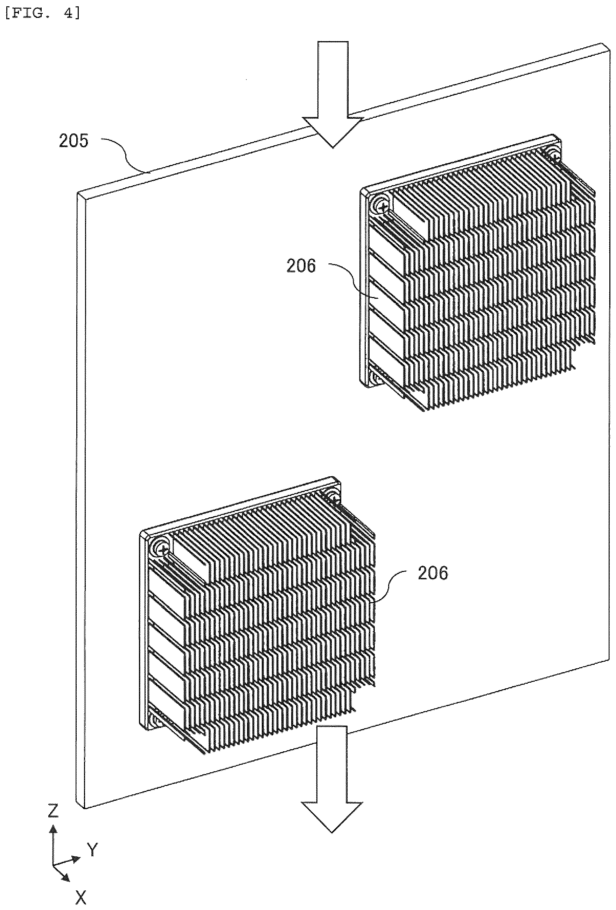

FIG. 4 shows an example in which the downstream heat absorbing fin 206 is arranged so as not to be a shadow of the upstream heat absorbing fin 206. With such an arrangement, a decrease in the speed of the air hitting the downstream heat absorbing fin 206 can be reduced.

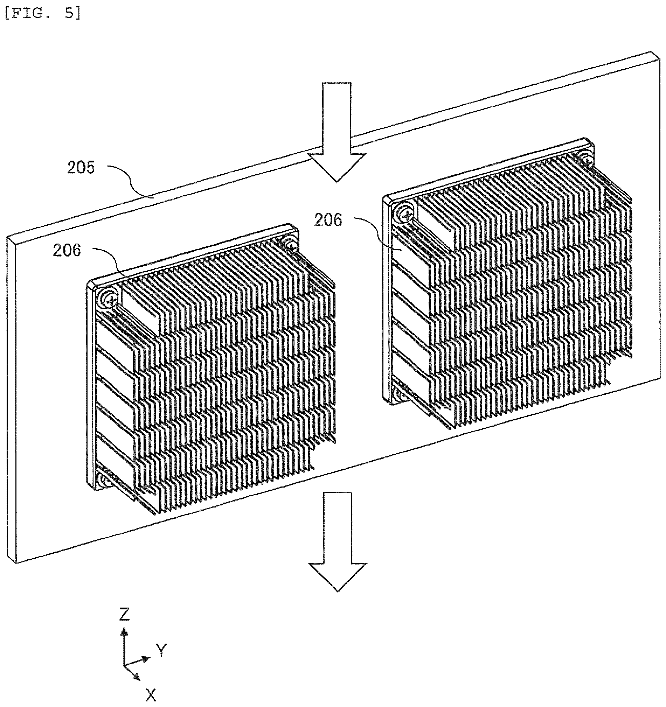

As shown in FIG. 5, the plurality of heat absorbing fins 206 may be arranged in parallel. By arranging the plurality of heat absorbing fins 206 in parallel, the air can uniformly hit the plurality of heat absorbing fins 206.

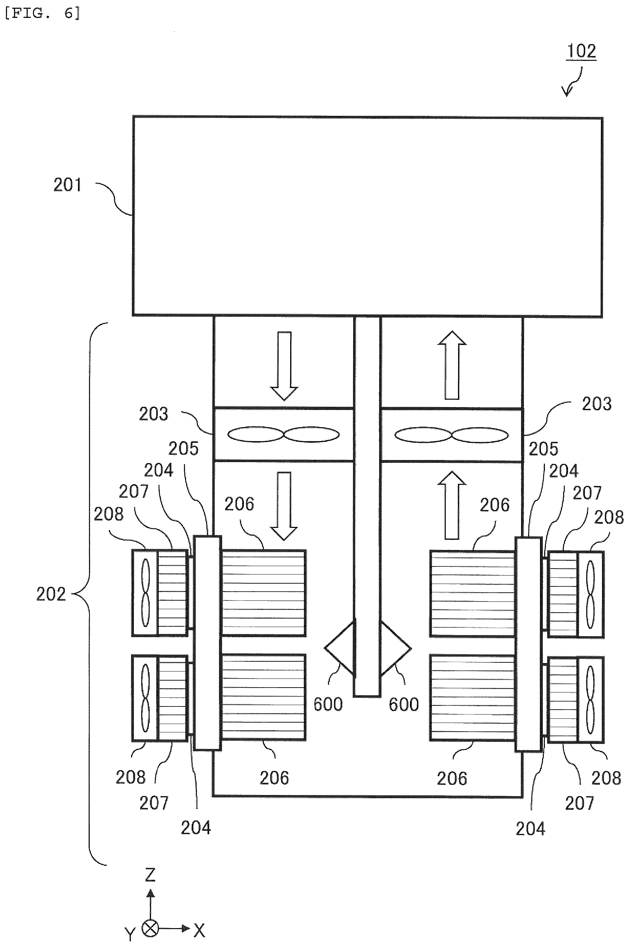

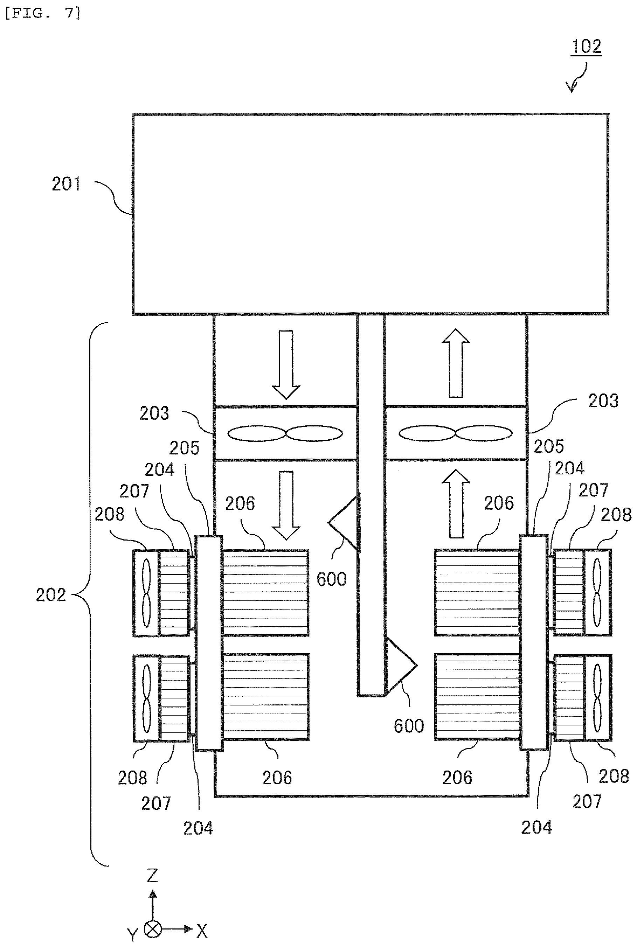

Configuration examples of the other container storage devices 102 will be described with reference to FIGS. 6 and 7. Deflection plates 600 are added to the container storage device 102 shown in FIGS. 6 and 7. The deflection plates 600 are each, for example, members having a triangular prism shape, and are provided to change a direction of the flow of the air.

FIG. 6 shows the deflection plates 600 each provided at a boundary between the plurality of heat absorbing fins 206. By providing the deflection plates 600 at the boundary between the plurality of heat absorbing fins 206, the flow of the air disturbed by passing through the upstream heat absorbing fin 206 is directed to the downstream heat absorbing fin 206.

FIG. 7 shows the deflection plates 600 each provided in a vicinity of the upstream heat absorbing fins 206. More specifically, the deflection plates 600 are provided in the vicinity of the most upstream heat absorbing fin 206 in a region where the air flows downward and in the vicinity of the most upstream heat absorbing fin 206 in a region where the air flows upward. By providing the deflection plates 600 in the vicinity of the upstream heat absorbing fins 206, the air flowing into the upstream heat absorbing fins 206 can be increased.

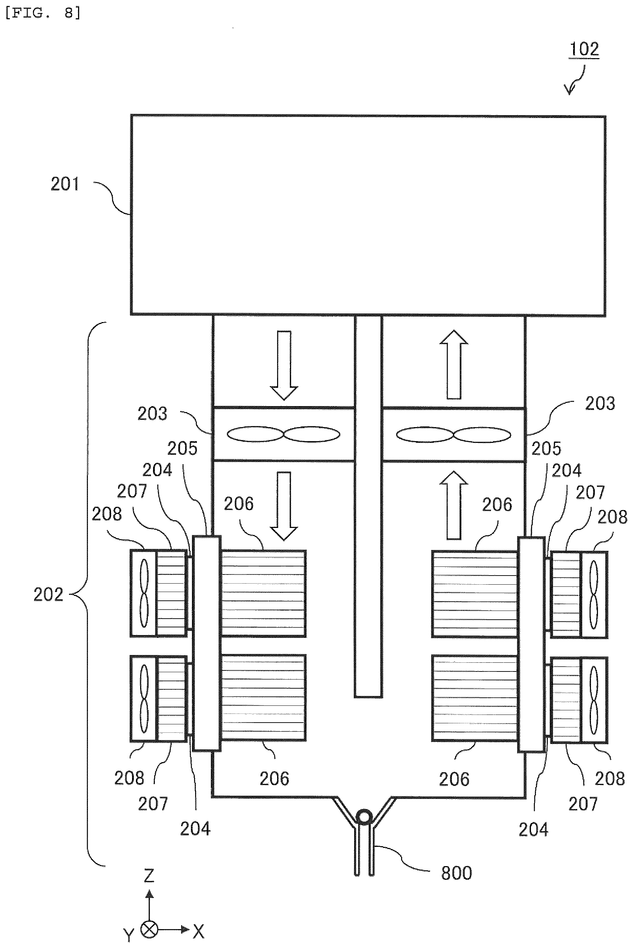

A configuration example of another container storage device 102 will be described with reference to FIG. 8. In the container storage device 102 shown in FIG. 8, a drain 800 is added to a central portion of a bottom surface of the cooling unit 202. When the air aspirated from the storage unit 201 is cooled, dew condensation water may be generated by the heat absorbing fins 206. When the dew condensation water stays in the cooling unit 202, various bacteria may proliferate, and thus, it is preferable that the dew condensation water is quickly discharged. In order to inhibit the proliferation of the various bacteria, a fungicide may be applied to the heat absorbing fins 206.

The drain 800 is used for discharging the dew condensation water, and is configured with, for example, a combination of a funnel-shaped member and a floating ball as shown in FIG. 8. The floating ball has a diameter larger than that of a hole of the funnel-shaped member and has a specific gravity smaller than that of the dew condensation water. When there is no dew condensation water, the floating ball blocks the hole of the funnel-shaped member and prevents outside air from inflowing. When the dew condensation water flows into the drain 800, the floating ball floats on top of the dew condensation water, and the dew condensation water is discharged from the drain 800. When the dew condensation water generated by the upstream heat absorbing fin 206 drops onto the downstream heat absorbing fin 206, it takes time to discharge the dew condensation water from the drain 800.

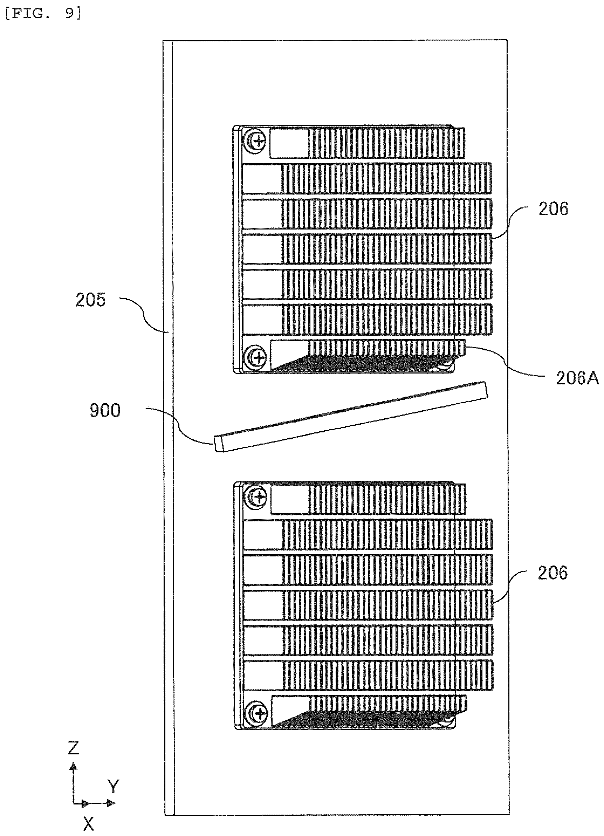

A configuration example of the heat absorbing fins 206 that prevents the dew condensation water from dropping onto the downstream heat absorbing fin 206 will be described with reference to FIG. 9. In the heat absorbing fins 206 shown in FIG. 9, a shape of a lowermost plate 206A is different from those of the other plates, and a guide 900 is added.

As shown in FIG. 9, the lowermost plate 206A is configured such that an angle formed by a lower surface of the lowermost plate 206A and a side surface of the cooling unit 202 is an obtuse angle. With such a configuration, the dew condensation water reached the lowermost plate 206A is guided to the side surface of the cooling unit 202 through the lower surface of the lowermost plate 206A.

As shown in FIG. 9, the guide 900 is a member provided on the side surface of the cooling unit 202 and between the heat absorbing fins 206 arranged in series along the flow of the air, and inclined with respect to a horizontal plane. By the guide 900 shown in FIG. 9, the dew condensation water guided to the side surface of the cooling unit 202 through the lower surface of the lowermost plate 206A is discharged from the drain 800 via the side surface and the bottom surface of the cooling unit 202 without dropping onto the downstream heat absorbing fin 206.

The drain 800 is not limited to the configuration shown in FIG. 8, and may have an electromagnetic valve or a check valve. A position of the drain 800 is not limited to the central portion of the bottom surface of the cooling unit 202 as shown in FIG. 8.

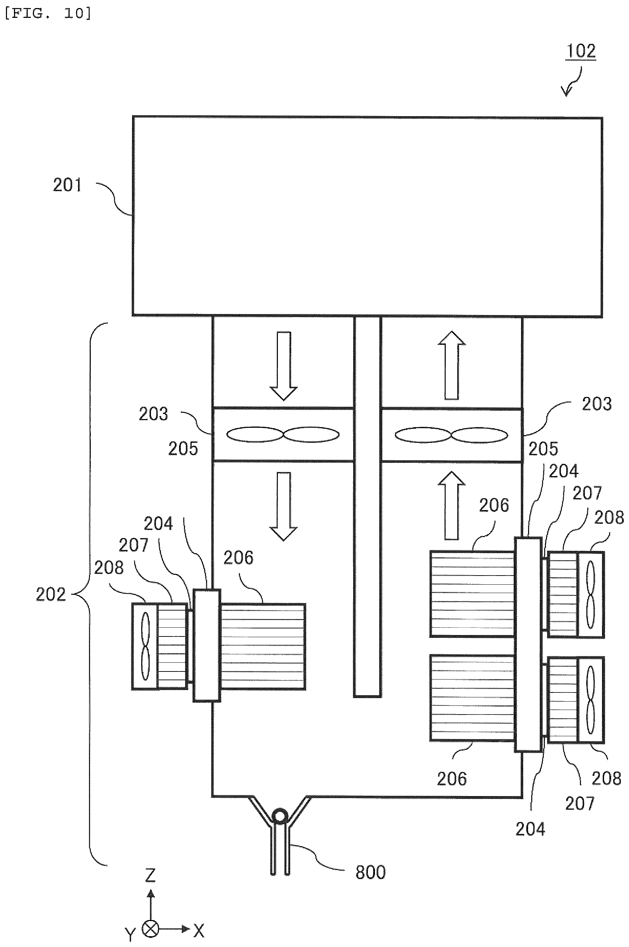

A configuration example of another container storage device 102 will be described with reference to FIG. 10. In the container storage device 102 shown in FIG. 10, a single number of heat absorbing fins 206 and the drain 800 are arranged in the region where the air flows downward, and a plurality of heat absorbing fins 206 are arranged in the region where the air flows upward. Further, the plurality of electrothermal devices 204 arranged along the flow of the air are controlled such that the power consumption of the electrothermal device 204 arranged most upstream among the plurality of electrothermal devices 204, that is, the electrothermal device 204 connected to the heat absorbing fin 206 arranged in the region where the air flows downward is maximized.

According to the configuration described with reference to FIG. 10, the air is cooled most in the heat absorbing fin 206 connected to the electrothermal device 204 arranged most upstream, and thus, the dew condensation water is intensively generated on the heat absorbing fin 206 arranged in the region where the air flows downward. The dew condensation water generated by the heat absorbing fin 206 arranged in the region where the air flows downward is quickly discharged from the drain 800 disposed below the heat absorbing fin 206. Therefore, the generation of the dew condensation water by the heat absorbing fins 206 arranged in the region where the air flows upward and the inflow of the various bacteria into the storage unit 201 are prevented. In the heat absorbing fin 206 connected to the electrothermal device 204 arranged most downstream, the air temperature is lowest, and thus, the dew condensation water may also be intensively generated. In this case, the same effect is achieved by arranging the drain 800 below the heat absorbing fin 206 arranged most downstream.

The embodiment of the invention has been described above. The invention is not limited to the above-described embodiment, and the components may be modified without departing from the gist of the invention. The plurality of components disclosed in the above-described embodiment may be combined as appropriate. Further, some components may be deleted from all the components disclosed in the above-described embodiment.

### Reference Signs List

101: automatic analyzer
102: container storage device
103: container
104: rack
105: rack transport path
107: control unit
108: input and output unit
109: memory unit
110: container gripping unit
111: container transport path
112: shutter
113: shutter switching unit
201: storage unit
202: cooling unit
203: circulation fan
204: electrothermal device
205: heat transfer plate
206: heat absorbing fin
206A: lowermost plate
207: heat radiating fin
208: heat radiating fan
600: deflection plate
800: drain
900: guide

## Claims

1. A container storage device comprising:
a storage unit configured to store a container storing a liquid; and
a cooling unit configured to cool air aspirated from the storage unit and supply the cooled air to the storage unit, wherein
the cooling unit includes
a plurality of fins arranged along a flow of the air, and
electrothermal devices respectively connected to the fins.

2. The container storage device according to claim 1, wherein
the fin includes a plurality of plates arranged in parallel with the flow of the air.

3. The container storage device according to claim 2, wherein
a guide inclined with respect to a horizontal plane is provided between the fins on a side surface of the cooling unit, and
an angle formed between a lower surface of a lowermost plate among the plurality of plates and a side surface of the cooling unit is an obtuse angle.

4. The container storage device according to claim 1 further comprising:
a control unit configured to control the electrothermal devices such that a difference in power consumed by the electrothermal devices falls within a predetermined range.

5. The container storage device according to claim 1, wherein
the cooling unit is provided with a deflection plate that changes a direction of the flow of the air.

6. The container storage device according to claim 5, wherein
the deflection plate is provided at a boundary between the plurality of fins.

7. The container storage device according to claim 5, wherein
the deflection plate is provided in a vicinity of an upstream fin among the plurality of fins.

8. The container storage device according to claim 1, wherein
the cooling unit is further provided with a drain that discharges dew condensation water generated by the fin.

9. The container storage device according to claim 8, wherein
a single number of fins and the drain are arranged in a region where the air flows downward, a plurality of fins are arranged in a region where the air flows upward, and
the container storage device further comprises:
a control unit configured to control the plurality of electrothermal devices such that a power consumed by the electrothermal device arranged most upstream among the plurality of electrothermal devices arranged along the flow of the air is maximized.

10. The container storage device according to claim 1, wherein
the fin is coated with a fungicide.
